Europäisches Patentamt

European Patent Office

Office européen des brevets

(11) Veröffentlichungsnummer: **0 458 129 B1**

(12) **EUROPÄISCHE PATENTSCHRIFT**

(45) Veröffentlichungstag der Patentschrift: **31.08.94**

(51) Int. Cl.⁵: **F16H 61/46**

(21) Anmeldenummer: **91107430.0**

(22) Anmeldetag: **07.05.91**

(54) **Druckbegrenzungsschaltung.**

(30) Priorität: **22.05.90 DE 4016518**

(43) Veröffentlichungstag der Anmeldung:
**27.11.91 Patentblatt 91/48**

(45) Bekanntmachung des Hinweises auf die
Patenterteilung:
**31.08.94 Patentblatt 94/35**

(84) Benannte Vertragsstaaten:
**DE FR GB IT SE**

(56) Entgegenhaltungen:
**DE-A- 3 109 857**
**FR-A- 2 231 537**
**US-A- 3 885 388**
**US-A- 4 704 866**

(73) Patentinhaber: **Hydromatik GmbH**
**Glockeraustrasse 2**
**D-89275 Elchingen (DE)**

(72) Erfinder: **Beck, Jochen, Dipl.-Ing.FH**
**Elisabethstrasse 33**
**W-7900 Ulm (DE)**

(74) Vertreter: **Körber, Wolfhart, Dr.rer.nat. et al**
**Patentanwälte Mitscherlich & Partner**
**Postfach 33 06 09**
**D-80066 München (DE)**

## Beschreibung

Die Erfindung betrifft eine Druckbegrenzungsschaltung nach dem Oberbegriff des Patentanspruchs 1.

Eine derartige Druckbegrenzungsschaltung ist beispielsweise aus der US-A-4 400 939 für einen Fahrantrieb zur Druckabschneidung des die Verstelleinrichtung betätigenden Steuerdrucks bekannt, um bei Überschreitung eines vorgegebenen maximalen Arbeitsdrucks in der Arbeitsleitung den Volumenstrom des Getriebes zu reduzieren. Die aus der Praxis bekannten Druckbegrenzungsschaltungen dieser Art sind so konzipiert, daß sie ein weiches, fahrzeuggerechtes Ansprechverhalten haben und damit den Nachteil einer trägen Reaktion bei schnellen dynamischen Lastwechseln aufweisen. Mit anderen Worten, die an die Verstelleinrichtung angeschlossene Hydropumpe wird bei kurzzeitig auftretenden Druckstößen in der Arbeitsleitung nicht entsprechend der vorgegebenen Kennlinie zurückgeschwenkt, sondern nimmt kurzzeitig Eckleistung auf, die eine sich nur langsam erholende starke Drückung der Antriebsmotor-Drehzahl hervorruft.

Es ist Aufgabe der Erfindung, eine Druckbegrenzungsschaltung der eingangs genannten Art unter Aufrechterhaltung ihres weichen, fahrzeuggerechten Ansprechverhaltens so weiterzubilden, daß sie auch bei schnellen dynamischen Lastwechseln unter Rückschwenkung der jeweils verstellbaren Hydromaschine anspricht.

Diese Aufgabe wird durch die kennzeichnenden Merkmale des Anspruches 1 gelöst.

Druckstöße in der Arbeitsleitung werden über den sich dabei verschiebenden Dämpfungskolben des Dämpfungszylinders in das Dämpfungsmedium eingeleitet. Der sich gleichzeitig im Dämpfungsmedium aufbauende Gegendruck bewirkt eine zeitliche Streckung des eingeleiteten Druckstoßes. Der Gegendruck wird für eine Zeitdauer im Dämpfungsmedium aufgebaut, die im umgekehrt proportionalen Verhältnis zu seiner Druckhöhe steht. Somit kann der Gegendruck durch Einstellung seiner Druckhöhe auf einen entsprechend niedrigen Wert für eine Zeitdauer aufrechterhalten werden, die im Zusammenwirken mit seiner Druckkraft die Massenträgheit der zu bewegenden Teile des Druckbegrenzungsventils überwindet; diese Druckkraft ist abhängig von der Größe der vom Gegendruck am weiteren Steueranschluß beaufschlagten Steuerfläche des Steuerkolbens des Druckbegrenzungsventils, die vorzugsweise größer als die von den Druckstößen in den Arbeitsleitungen beaufschlagte, vordere Kolbenfläche des Dämpfungszylinders ist. Auf diese Weise wird erreicht, daß ein Druckstoß in der Arbeitsleitung, der beispielsweise infolge einer kurzzeitigen Überlastung des Schaufel- oder des Fahrantriebs eines Radladers auftritt, zur Betätigung des Druckbegrenzungsventils, d.h. zur Druckabschneidung des an der Verstelleinrichtung anstehenden Steuerdrucks führt, so daß der Volumenstrom des hydrostatischen Getriebes beispielsweise durch schnelle Rückschwenkung der Hydropumpe verringert und somit eine Drückung der Dieselmotor-Drehzahl verhindert wird.

Das im Dämpfungszylinder verwendete Dämpfungsmedium kann ein Gas, vorzugsweise ein vorgespanntes Gas sein, dessen Druck den Ansprechdruck des Dämpfungszylinders bestimmt.

Der Ansprechdruck des Dämpfungszylinders kann auch durch eine Feder bestimmt werden, die im Dämpfungsraum des Dämpfungszylinders, dessen Kolben druckbeaufschlagend, angeordnet ist.

Gemäß einer Weiterbildung der Erfindung ist das Dämpfungsmedium ein Drucköl. Dabei kann der Dämpfungsraum über eine Drosselstelle oder ein Druckminderventil an jede Druckleitung, wie Speise- oder Arbeitsleitung, angeschlossen sein, so daß der abgenommene Druck an die Arbeitsleitung angeschlossen sein, so daß der Arbeitsdruck das Dämpfungsmedium vorspannt und das Ansprechverhalten des Dämpfungszylinders bestimmt.

Zur Bestimmung der Druckhöhe des Gegendrucks kann ein Dämpfungsspalt zwischen dem Dämpfungskolben und der Zylinderwandung des Dämpfungszylinders ausgebildet und/oder der Dämpfungsraum über eine Ablaufdrossel an den Tank angeschlossen sein.

Vorzugsweise ist die Ablaufdrossel zur Veränderung der zeitlichen Impulsstreckung durch den Dämpfungszylinder verstellbar ausgebildet.

Weitere Merkmale und Vorteile der Erfindung ergeben sich aus den verbleibenden Unteransprüchen.

Nachstehend ist die Erfindung anhand dreier bevorzugter Ausführungsbeispiele unter Bezugnahme auf die Zeichnung näher beschrieben. Es zeigen

Fig. 1    einen Schaltplan eines hydrostatischen Getriebes mit integrierter Druckbegrenzungsschaltung gemäß dem ersten Ausführungsbeispiel der Erfindung, und

Fig. 2    die Druckbegrenzungsschaltung nach Fig. 1 im vergrößerten Maßstab.

Fig. 3    einen Schaltplan eines hydrostatischen Getriebes mit integrierter Druckbegrenzungsschaltung gemäß dem zweiten Ausführungsbeispiel der Erfindung, und

Fig. 4    einen Schaltplan eines hydrostatischen Getriebes mit integrierter Druckbegrenzungsschaltung gemäß dem dritten Ausführungsbeispiel der Erfindung.

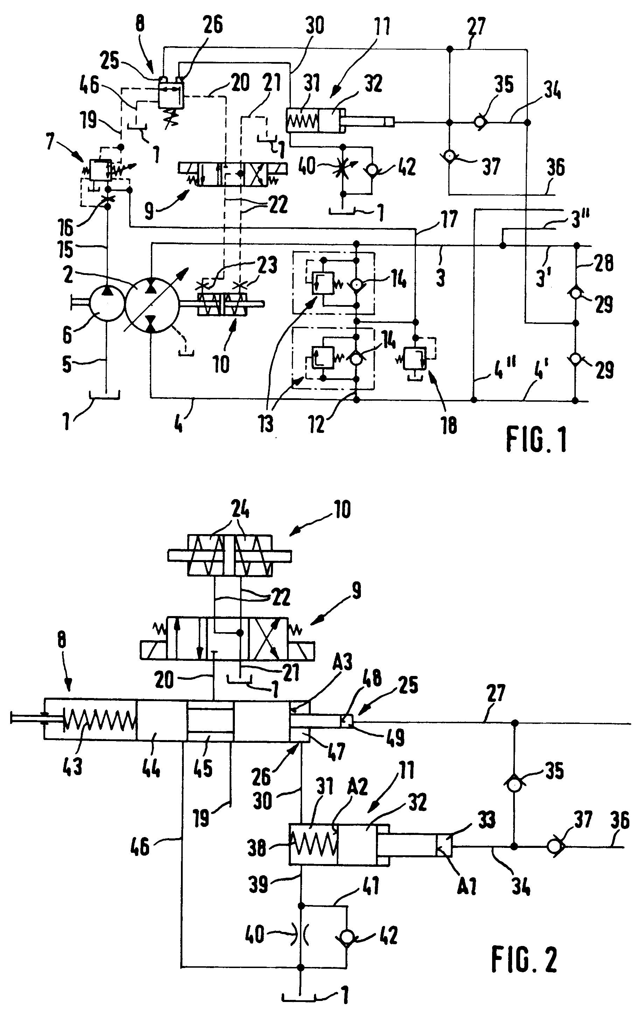

Fig. 1 zeigt ein hydrostatisches Getriebe mit geschlossenem Kreislauf. Es umfaßt eine von einem nicht gezeigten Dieselmotor angetriebene, in zwei Förderrichtung fördernde Verstellpumpe 2, beispielsweise in Schrägscheibenbauweise, mit zwei angeschlossenen Arbeitsleitungen 3,4, die über weiterführende Arbeitsleitungen 3',4' bzw. 3'',4'' zu zwei nicht gezeigten Verbrauchern in Form eines Hydromotors für den Fahrantrieb und eines Hydrozylinders für den Schaufelantrieb eines Radladers führen. Das hydrostatische Getriebe umfaßt ferner eine mit der Verstellpumpe 2 mechanisch verbundene, über eine Leitung 5 an den Tank 1 angeschlossene Hilfspumpe 6, ein einstellbares Differenzdruckregelventil 7, ein Druckbegrenzungsventil 8 in Form eines Druckabschaltventils, ein 4/3-Wegeventil 9 als Fahrtrichtungsventil, eine Verstelleinrichtung 10 in Form eines federzentrierten, doppeltwirkenden, gleichgängigen Verstellzylinders, der mit der Schrägscheibe der Verstellpumpe 2 zum Verstellen des Verdrängervolumens derselben gekoppelt ist, und einen Dämpfungszylinder 11.

Beide Arbeitsleitungen 3,4 sind über eine Leitung 12 miteinander verbunden, an die zwei Druckbegrenzungsventile 13 jeweils im Nebenschluß, je ein Rückschlagventil 14 in der Leitung 12 umgehend, angeschlossen sind. Da beide Rückschlagventile 14 in entgegengesetzten Richtungen sperren, begrenzen die Druckbegrenzungsventile 13 den Arbeitsdruck in der jeweiligen Arbeitsleitung 3 bzw. 4.

Die Hilfspumpe 6 dient als Speise- und Steuerpumpe. Sie ist durch eine Hilfsdruckleitung 15 an das Differenzdruckregelventil 7 mit vorgeschalteter Blende 16 angeschlossen. Eine nach der Blende 16 abzweigende Speiseleitung 17 führt zur Leitung 12, in die sie zwischen beiden Rückschlagventilen 14 einmündet. Zur Absicherung des maximalen Speisedrucks ist ein Druckbegrenzungsventil 18 an die Speiseleitung 17 angeschlossen.

Der Ausgang des Differenzdruckregelventils 7 ist über eine erste Steuerleitung 19 mit dem Eingang des Druckabschaltventils 8 verbunden, dessen Ausgang über eine zweite Steuerleitung 20 zum 4/3-Wegeventil 9 führt, welches elektromagnetisch betätigbar ist, drei Schaltstellungen, nämlich Vorwärtsfahrt, Leerlauf und Rückwärtsfahrt, aufweist und über eine Leitung 21 an den Tank 1 sowie zwei Steuerzweigleitungen 22 mit je einer Blende 23 an beide Druckräume 24 des Verstellzylinders 10 angeschlossen ist.

Das Druckabschaltventil 8 weist einen ersten und einen zweiten Steueranschluß 25 bzw. 26 auf. Vom ersten Steueranschluß 25 führt eine erste Arbeitszweigleitung 27 zu einer beide Arbeitsleitungen 3',4' verbindenden Verbindungsleitung 28, in der zwei in Richtung beider Arbeitsleitungen 3',4' sperrende Rückschlagventile 29 angeordnet sind. Der zweite Steueranschluß 26 führt über eine Anschlußleitung 30 zum Dämpfungsraum 31 des Dämpfungszylinders 11, dessen Dämpfungskolben 32 zwei einander gegenüberliegende Kolbenflächen unterschiedlicher Größe aufweist. Die größere, hintere Kolbenfläche A2 begrenzt den Dämpfungsraum 31 und die kleinere, vordere Kolbenfläche A1 einen Druckraum 33, der über eine zweite Arbeitszweigleitung 34 mit einem Rückschlagventil 35 an die erste Arbeitszweigleitung 27 angeschlossen ist. Das Rückschlagventil 35 sperrt den Durchfluß in Richtung dieser ersten Arbeitszweigleitung 27. In die zweite Arbeitszweigleitung 34 mündet zwischen den Dämpfungszylinder 11 und dem Rückschlagventil 35 eine dritte Arbeitszweigleitung 36 mit einem Rückschlagventil 37 ein, die sowohl zur ersten Arbeitszweigleitung 27 weiterführt als auch an eine der Verbindungsleitung 28 entsprechende, nicht gezeigte Verbindungsleitung mit Rückschlagventilen angeschlossen ist, die die Arbeitsleitungen 3'',4'' miteinander verbindet. Das Rückschlagventil 37 sperrt in Richtung dieser Verbindungsleitung.

Eine im Dämpfungsraum 31 angeordnete Druckfeder 38 beaufschlagt die größere Kolbenfläche A2 des Dämpfungskolbens 32 und bestimmt den Ansprechdruck des Dämpfungszylinders 11. Der Dämpfungsraum 31 ist über eine Leitung 39, in der eine verstellbare Ablaufdrossel 40 angeordnet ist, an den Tank 1 angeschlossen. Ein By-Paß 41 mit einem in Richtung Tank 1 sperrenden Rückschlagventil 42 umgeht die Ablaufdrossel 40.

Das Druckabschaltventil 8 ist von herkömmlicher Bauart mit einem durch eine Feder 43 in Richtung Offenstellung beaufschlagtem Steuerkolben 44 mit einer Ringnut 45, die in der Offenstellung die erste Steuerleitung 19 mit der zweiten Steuerleitung 20 und letztere in der Schließstellung mit einem Rücklauf 46 zum Tank 1 verbindet. Der Steuerkolben 44 ist auf der der federbeaufschlagten Kolbenfläche gegenüberliegenden Seite abgesetzt und weist auf diese Weise zwei Steuerflächen unterschiedlicher Größe auf. Die größere Steuerfläche A3 begrenzt einen größeren Steuerraum 47 und ist dem zweiten Steueranschluß 26 zugeordnet. Die kleinere Steuerfläche 48 begrenzt einen kleineren Steuerraum 49 und ist dem ersten Steueranschluß 25 zugeordnet.

Da das beschriebene hydrostatische Getriebe von herkömmlicher Konstruktion ist, wird seine Funktion als bekannt vorausgesetzt und lediglich soweit angesprochen wie es für das Verständnis der Funktionsweise der erfindungsgemäßen Druckbegrenzungsschaltung erforderlich ist.

Der der Drehzahl des Dieselmotors proportionale Förderstrom der Hilfspumpe 6 erzeugt an der Blende 16 einen Druckabfall, der mit Hilfe des Differenzdruckregelventils 7 in einen Steuerdruck umgesetzt wird. Über das 4/3-Wegeventil 9 beaufschlagt der Steuerdruck den Verstellzylinder 10 und bewirkt dadurch bei zunehmender Dieselmotordrehzahl eine Vergrößerung des Fördervolumens der Verstellpumpe 2 und umgekehrt.

In der jeweiligen, als Speiseleitung dienenden Arbeitsleitung 3 bzw. 4 wird ein Arbeitsdruck aufgebaut, der dem vom Fahrantrieb bzw. Schaufelantrieb benötigten Drehmoment entspricht. Dieser Arbeitsdruck steht über die erste und/oder dritte Arbeitszweigleitung 27 bzw. 36 am ersten Steueranschluß 25 des Druckabschaltventils 8 sowie über die zweite und/oder dritte Arbeitszweigleitung 34 bzw. 36 an der kleineren Kolbenfläche $A_1$ des Dämpfungszylinders 11 ständig an. Sobald die hydraulische Kraft des Arbeitsdrucks die Federkraft der Feder 43 übersteigt, schließt das Druckabschaltventil 8 und entlastet den Steuerdruck über den Rücklauf 46 zum Tank 1 hin, um auf diese Weise die Verstellpumpe 2 über die Verstelleinrichtung 10 in die Nullstellung zurückzuschwenken, vorausgesetzt, der entsprechende maximale Arbeitsdruck steht ausreichend lange an, um die Massenträgheit der bewegten Ventilteile des Druckabschaltventils 8 zu überwinden. Im Fall des Dämpfungszylinders 11 erfolgt unter der Einwirkung des maximalen Arbeitsdrucks eine stetige Verschiebung des Dämpfungskolbens 32 und somit ein stetiger Abfluß des Dämpfungsmediums über die Ablaufdrossel 40 in den Tank 1, wobei nahezu kein Gegendruck aufgebaut wird.

Tritt nun während des Betriebs des Fahrzeuges kurzzeitig eine Lastspitze im Fahrantrieb oder im Schaufelantrieb auf, so entsteht in der jeweiligen, als Speiseleitung dienenden Arbeitsleitung 3',4' bzw. 3'',4'' ein Druckstoß $p_1 t_1$, der über die erste oder dritte Arbeitszweigleitung 27 bzw. 36 auf das Druckabschaltventil 8 wirkt und aufgrund seiner äußerst kurzen Zeitdauer $t_1$ nicht imstande ist, die Massenträgheit der beweglichen Ventilteile des Druckabschaltventils 8 zu überwinden, welches somit in der Offenstellung verbleibt. Der Druckstoß wirkt ferner über die zweite oder dritte Arbeitszweigleitung 34 bzw. 36 auf die kleinere Kolbenfläche $A_1$ des Dämpfungskolbens 32 und erteilt diesem sowie dem Dämpfungsmedium einen Impuls mv, wenn seine hydraulische Kraft $p_1 A_1$ die Druckkraft der Druckfeder 38 übersteigt. Der sich somit bewegende Dämpfungskolben 32 verdrängt unter Aufbau eines Gegendrucks $p_2$ einen Teil des Dämpfungsmediums über die Ablaufdrossel 40. Die auf die größere Kolbenfläche $A_2$ wirkende hydraulische Kraft $p_2 A_2$ dieses Gegendrucks $p_2$ verzögert die Kolbenbewegung und baut auf diese Weise während eines Zeitraums $t_2$ und entlang dem Kolbenweg s den Impuls $mv = 2ms/t_2$ und damit den eingeleiteten Kraftstoß $p_1 A_1 t_1$ unter der Annahme

gleichmäßiger Verzögerung nach der Gleichung

$$p_1 A_1 t_1 = 2ms/t_2 = p_2 A_2 t_2$$

mit der zeitlichen Streckung $t_2/t_1 = p_1 A_1/p_2 A_2$ ab.

Der bei vorgegebener Zeit $t_2 = \sqrt{2\rho s^2/p_2}$, mit $\rho$ als Dichte des Dämpfungsmediums und unter Vernachlässigung der Kolbenmasse, entstehende Gegendruck $p_2 = 2\rho s^2/t_2^2$ beaufschlagt die größere Steuerfläche $A_3$ des Druckabschaltventils 8 mit einer hydraulischen Kraft $p_2 A_3$, die um so größer ist, je größer $A_3$ gewählt wird; d.h. die zur Erzielung einer gegenüber $t_1$ größeren Zeitdauer $t_2$ erforderliche, gegenüber $p_1 A_1$ geringere Kraft $p_2 A_2$ kann durch entsprechende Wahl von $A_3$ auf denjenigen Wert vergrößert werden, der im Zusammenwirken mit der Zeitdauer $t_2$ ausreicht, die Massenträgheit der zu bewegenden Ventilteile des Druckabschaltventils 8 zu überwinden.

Die Kolbenfläche $A_2$ des Dämpfungskolbens 32 ist so gewählt, daß eine ausreichende Drosselfunktion der Ablaufdrossel 40 gewährleistet ist; zur Vermeidung eines zu hohen Gegendrucks ist sie vorzugsweise größer als die Kolbenfläche $A_1$.

Sobald der Gegendruck $p_2$ wieder abfällt, saugt der Dämpfungskolben 32, wenn er unter dem Druck der Druckfeder 38 in seine in der Zeichnung gezeigte ursprüngliche Stellung zurückfährt, Drucköl über den By-Paß 41 aus dem Tank 1 an und füllt auf diese Weise den Dämpfungsraum 31 mit Dämpfungsmedium.

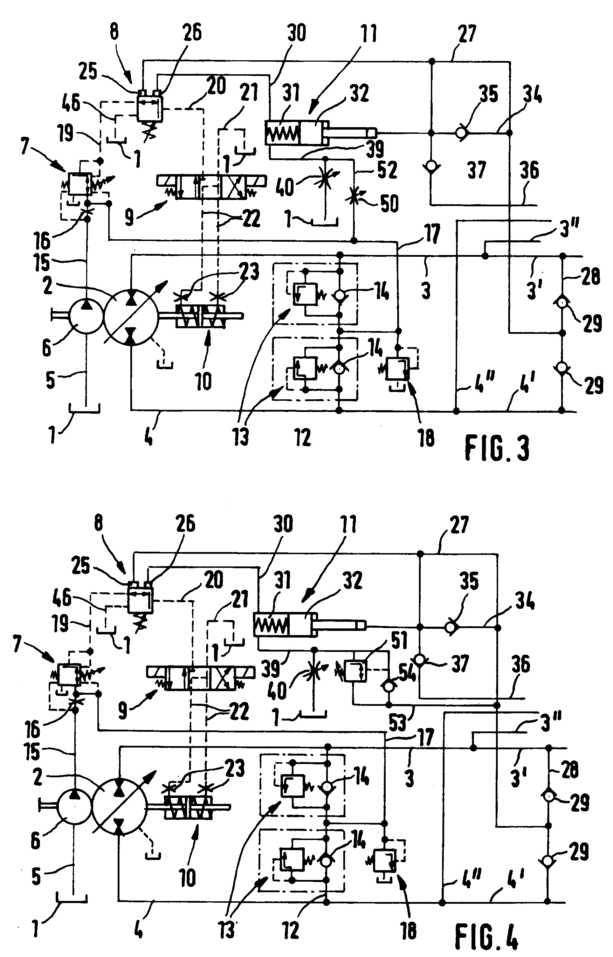

Der im ersten Ausführungsbeispiel verwendete By-Paß 41 zum Füllen des Dämpfungsraums 31 mit Drucköl aus dem Tank 1 ist im Ausführungsbeispiel nach Fig. 3 durch eine eine verstellbare Drosselstelle 50 enthaltende Leitungsverbindung 52 zwischen der zum Dämpfungsraum 31 führenden Leitung 39 und der Speiseleitung 17 ersetzt. Auf diese Weise wird der Dämpfungsraum 31 mit Drucköl aus der Speiseleitung 17 mit einem mit Hilfe der verstellbaren Drosselstelle 50 eingestellten, den Ansprechdruck des Dämpfungszylinders 11 bestimmenden Druck gefüllt.

Anstelle der Leitungsverbindung 52 wird im Ausführungsbeispiel gemäß Fig. 4 eine die Leitung 39 mit der ersten Arbeitszweigleitung 27 verbindende Leitungsverbindung 53 mit einem Druckminderventil 51 und einem parallelgeschalteten, in Richtung zum Dämpfungsraum 31 sperrenden Rückschlagventil 54 verwendet, um den Dämpfungsraum 31 mit Drucköl aus der Arbeitsleitung zu füllen. Mit Hilfe des Druckminderventils 51 wird der Arbeitsdruck auf den für den gewünschten Ansprechdruck des Dämpfungszylinders 11 erforderlichen Wert reduziert.

**Patentansprüche**

1. Druckbegrenzungsschaltung für ein hydrostatisches Getriebe, insbesondere für einen Antrieb eines Radladers, mit einer Hydropumpe (2), wenigstens einem Verbraucher, insbesondere einem Hydromotor, einer druckabhängigen Verstelleinrichtung (10) zum Verstellen des Verdrängervolumens der Hydropumpe und/oder des Hydromotors und mit einem an die Verstelleinrichtung angeschlossenen Druckbegrenzungsventil (8), an dessen Steueranschluß (25) der Druck der Arbeitsleitung des hydrostatischen Getriebes ansteht, dadurch **gekennzeichnet**, daß ein weiterer Steueranschluß (26) des Druckbegrenzungsventils (8) mit einem Dämpfungsmedium beaufschlagbar ist, welches in einem Dämpfungszylinder (11) hinter dessen Dämpfungskolben (32) eingeschlossen ist, der mit seiner vorderen Kolbenfläche ($A_1$) unter dem Druck in wenigstens einer Arbeitsleitung (34, 36) steht.

2. Druckbegrenzungsschaltung nach Anspruch 1, dadurch **gekennzeichnet**, daß die am weiteren Steueranschluß (26) vom Dämpfungsmedium beaufschlagbare Steuerfläche ($A_3$) des Druckbegrenzungsventils (8) größer als die Kolbenfläche ($A_1$) des Dämpfungskolbens (32) ist.

3. Druckbegrenzungsschaltung nach Anspruch 1 oder 2, dadurch **gekennzeichnet**, daß das Dämpfungsmedium ein Gas ist.

4. Druckbegrenzungsschaltung nach wenigstens einem der vorhergehenden Ansprüche, dadurch **gekennzeichnet**, daß das Dämpfungsmedium ein vorgespanntes Gas ist, dessen Druck den Ansprechdruck des Dämpfungszylinders (11) bestimmt.

5. Druckbegrenzungsschaltung nach wenigstens einem der Ansprüche 1 bis 3, dadurch **gekennzeichnet**, daß im Dämpfungsraum (31) des Dämpfungszylinders (11) eine den Dämpfungskolben (32) beaufschlagende Druckfeder (38) angeordnet ist, die den Ansprechdruck des Dämpfungszylinders (11) bestimmt.

6. Druckbegrenzungsschaltung nach wenigstens einem der Ansprüche 1, 2 und 5, dadurch **gekennzeichnet**, daß das Dämpfungsmedium ein Drucköl ist.

7. Druckbegrenzungsschaltung nach Anspruch 6, dadurch **gekennzeichnet**, daß der Dämpfungsraum (31) über eine Drosselstelle (50) an die Speiseleitung (17) angeschlossen ist.

8. Druckbegrenzungsschaltung nach Anspruch 6, dadurch **gekennzeichnet**, daß der Dämpfungsraum (31) über ein Druckminderventil (51) an die Arbeitsleitung (27) angeschlossen ist.

9. Druckbegrenzungsschaltung nach wenigstens einem der vorhergehenden Ansprüche, dadurch **gekennzeichnet**, daß der Dämpfungsraum (31) über eine Ablaufdrossel (40) an den Tank (1) angeschlossen ist.

10. Druckbegrenzungsschaltung nach Anspruch 8, dadurch **gekennzeichnet**, daß die Ablaufdrossel (40) zur Veränderung der durch den Dämpfungszylinder (11) bewirkten zeitlichen Impulsstreckung verstellbar ist.

11. Druckbegrenzungsschaltung nach wenigstens einem der vorhergehenden Ansprüche, dadurch **gekennzeichnet**, daß in jeder zum Dämpfungszylinder (11) führenden Arbeitsleitung (34,36) ein in dessen Richtung öffnendes Rückschlagventil (35,37) angeordnet ist.

12. Druckbegrenzungsschaltung nach wenigstens einem der Ansprüche 9 bis 11, **gekennzeichnet** durch einen die Ablaufdrossel (40) umgehenden By-Paß (41), in dem ein in Richtung Tank (1) sperrendes Rückschlagventil (42) angeordnet ist.

13. Druckbegrenzungsschaltung nach wenigstens einem der vorhergehenden Ansprüche, dadurch **gekennzeichnet**, daß die Steuerfläche (48) an dem vom Arbeitsdruck beaufschlagten Steueranschluß (25) des Druckbegrenzungsventils (8) kleiner als die vom Dämpfungsmedium beaufschlagbare Steuerfläche ($A_3$) ist.

14. Druckbegrenzungsschaltung nach wenigstens einem der vorhergehenden Ansprüche , dadurch **gekennzeichnet**, daß die den Dämpfungsraum (31) begrenzende Kolbenfläche ($A_2$) des Dämpfungskolbens (32) größer als dessen von den Druckstößen ($p_1 t_1$) beaufschlagbare Kolbenfläche ($A_1$) ist.

## Claims

1. Pressure limiting circuit for a hydrostatic transmission, in particular for the transmission of a wheel loader, with a hydraulic pump (2), at least one consumer, in particular a hydraulic motor, a pressure dependent adjustment device (10) for adjusting the displacement volume of the hydraulic pump and/or the hydraulic motor and with a pressure limiting valve (8) connected to the adjustment device, at the control connection (25) of which valve the pressure of the operating line of the hydrostatic transmission is applied, characterised in that, a further control connection (26) of the pressure limiting valve (8) can be acted upon by a damping medium, enclosed in a damping cylinder (11) behind the damping piston (32) thereof, the forward piston surface ($A_1$) thereof standing under the pressure in at least one operating line (34, 36).

2. Pressure limiting circuit according to claim 1, characterised in that, the control surface ($A_3$) of the pressure limiting valve (8) at the further control connection (26), which surface can be acted upon by the damping medium, is larger than the piston surface ($A_1$) of the damping piston (32).

3. Pressure limiting circuit according to claim 1 or 2, characterised in that, the damping medium is a gas.

4. Pressure limiting circuit according to at least one of the preceding claims, characterised in that, the damping medium is a pre-loaded gas, the pressure of which determines the response pressure of the damping cylinder (11).

5. Pressure limiting circuit according to at least one of the claims 1 to 3, characterised in that, a compression spring (38) acting upon the damping piston (32) is arranged in the damping chamber (31) of the damping cylinder (11), which spring determines the response pressure of the damping cylinder (11).

6. Pressure limiting circuit according to at least one of the claims 1, 2 and 5, characterised in that, the damping medium is pressure oil.

7. Pressure limiting circuit according to claim 6 characterised in that, the damping chamber (31) is connected to the supply line (17) via a throttle station (50).

8. Pressure limiting circuit according to claim 6, characterised in that, the damping chamber (31) is connected to the operating line (27) via a pressure-reducing valve (51).

9. Pressure limiting circuit according to at least one of the preceding claims, characterised in that, the damping chamber (31) is connected to the tank (1) via a discharge throttle (40).

10. Pressure limiting circuit according to claim 8, characterised in that, the discharge throttle (40) is adjustable, so that the temporal lengthening of impulses effected by the damping cylinder (11) can be adjusted.

11. Pressure limiting circuit according to at least one of the preceding claims, characterised in that, in each of the operating lines (34, 36) leading to the damping cylinder (11), there is arranged a non-return valve (35, 37) open towards the cylinder.

12. Pressure limiting circuit according to at least one of the claims 9 to 11, characterised by a by-pass (41) bypassing the discharge throttle (40), in which by-pass a non-return valve (42) is arranged, blocking in the direction of the tank (1).

13. Pressure limiting circuit according to at least one of the preceding claims, characterised in that, the control surface (48) at the control connection (25) of the pressure limiting valve (8) which is acted upon by the operating pressure is smaller than the control surface ($A_3$) which can be acted upon by the damping medium.

14. Pressure limiting circuit according to at least one of the preceding claims, characterised in that, the piston surface ($A_2$) of the damping piston (32) defining the damping chamber (31) is larger than the piston surface ($A_1$) thereof which can be acted upon by the pressure surges ($p_1 t_1$).

**Revendications**

1. Circuit limiteur de pression pour une transmission hydrostatique, en particulier pour un entraînement d'un chargeur sur roues, avec une pompe hydrostatique (2), au moins un utilisateur, en particulier un moteur hydrostatique, un dispositif de réglage (10) en fonction de la pression pour régler le volume de refoulement de la pompe hydrostatique et/ou du moteur hydrostatique, et avec une vanne (8) destinée à limiter la pression, raccordée au dispositif de réglage, sur le raccord de commande (25) de laquelle est présente la pression de la conduite de travail de la transmission hydrostatique, **caractérisé** en ce qu'un autre raccord de commande (26) de la vanne (8) destinée à limiter la pression peut être soumis à l'action d'un fluide d'amortissement qui est inclus dans un cylindre d'amortissement (11) derrière le piston (32) de ce cylindre, lequel piston est soumis sur sa face antérieure ($A_1$) à la pression régnant dans au moins une conduite de travail (34, 36).

2. Circuit limiteur de pression selon la revendication 1, caractérisé en ce que la surface de commande ($A_3$) de la vanne (8) destinée à limiter la pression, soumise à l'action du fluide d'amortissement sur l'autre raccord de commande (26) de ladite vanne, est plus grande que la surface ($A_1$) du piston d'amortissement (32).

3. Circuit limiteur de pression selon la revendication 1 ou 2, caractérisé en ce que le fluide d'amortissement est un gaz.

4. Circuit limiteur de pression selon au moins une des revendications précédentes, caractérisé en ce que le fluide d'amortissement est un gaz préalablement comprimé, dont la pression détermine la pression de réponse du cylindre d'amortissement (11).

5. Circuit limiteur de pression selon au moins une des revendications 1 à 3, caractérisé en ce qu'un ressort de pression (38) est disposé dans la chambre d'amortissement (31) du cylindre d'amortissement (11), en agissant sur le piston d'amortissement (32), ce ressort déterminant la pression de réponse du cylindre d'amortissement (11).

6. Circuit limiteur de pression selon au moins une des revendications 1, 2 et 5, caractérisé en ce que le fluide d'amortissement est une huile de pression.

7. Circuit limiteur de pression selon la revendication 6, caractérisé en ce que la chambre d'amortissement (31) est raccordée à la conduite d'alimentation (17) à travers un étranglement (50).

8. Circuit limiteur de pression selon la revendication 6, caractérisé en ce que la chambre d'amortissement (31) est raccordée à la conduite de travail (27) à travers une vanne réductrice de pression (51).

9. Circuit limiteur de pression selon au moins une des revendications précédentes, caractérisé en ce que la chambre d'amortissement (31) est raccordée au réservoir (1) à travers un étranglement de décharge (40).

10. Circuit limiteur de pression selon la revendication 8, caractérisé en ce que l'étranglement de décharge (40) est réglable pour modifier l'étalement des impulsions dans le temps, réalisé par le cylindre d'amortissement (11).

11. Circuit limiteur de pression selon au moins une des revendications précédentes, caractérisé en ce que, dans chaque conduite de travail (34, 36) allant au cylindre d'amortissement (11), est disposée une soupape de retenue (35, 37) s'ouvrant en direction de celui-ci.

12. Circuit limiteur de pression selon au moins une des revendications 9 à 11, caractérisé par une dérivation (41) contournant l'étranglement de décharge (40), dans laquelle est disposée une soupape de retenue (42) se fermant en direction du réservoir (1).

13. Circuit limiteur de pression selon au moins une des revendications précédentes, caractérisé en ce que la surface de commande (48) sur le raccord de commande (25) de la vanne (8) limitant la pression, soumis à la pression de travail, est plus petite que la surface de commande ($A_3$) pouvant être sollicitée par le fluide d'amortissement.

14. Circuit limiteur de pression selon au moins une des revendications précédentes, caractérisé en ce que la surface ($A_2$) du piston d'amortissement (32) délimitant la chambre d'amortissement est plus grande que la surface ($A_1$) de ce piston pouvant être sollicitée par les à-coups de pression ($p_1 t_1$).

EP 0 458 129 B1

FIG. 1

FIG. 2

FIG.3

FIG.4